# EUROPEAN PATENT APPLICATION

(11) **EP 2 497 369 A1**
(43) Date of publication of application: **12.09.2012**
(21) Application number: 11177525.0
(22) Date of filing: 12.08.2011
(51) Int. Cl.: A23C 9/152, A23L 1/00, A23L 2/54

(54) **Method for making a foaming beverage and beverage having a foam composition**

(30) Priority: 11.03.2011 US 45714
(71) Applicant: Linde Aktiengesellschaft, 80331 München (DE)
(72) Inventor: Finley, Steven, Wayne, NJ New Jersey 07470 (US); Sethna, Rustam H., Clinton, NJ New Jersey 08809 (US); Morgan, Daniel A., Westfield, NJ New Jersey 07090 (US)
(74) Representative: Hofmann, Andreas

(57) **Abstract**

In order to modify the appearance and mouth feel of a beverage to have a foaming consistency, a method for making a foaming beverage includes providing a beverage having at least one lipid-based ingredient therein and mixing nitrous oxide with said beverage. A beverage having a foam composition includes a liquid having at least one lipid-based ingredient therein and nitrous oxide mixed into the liquid. The nitrous oxide may be in gas phase.

## Description

### Technical field

The present invention relates to the technical field of the appearance and mouth feel of beverages.

### Background of the present invention; prior art

It is known that mixing heavy cream with nitrous oxide (N₂O) gas under pressure forms small bubbles within the mixture. Under pressure, the gas/cream mixture remains stable and nitrous oxide gas provides protection against spoilage due to microorganism activity. Accordingly, cream stored with nitrous oxide has a longer shelf life than cream stored alone.

When the cream/nitrous oxide mixture is dispensed from a pressurized container, the pressure of the mixture is reduced substantially and accordingly fine bubbles in the mixture expand. The gas is very soluble in fatty compounds, such as cream. In aerosol whipped products, it is dissolved in the cream under pressure.

When released, the pressure is reduced and the dissolved nitrous oxide gas expands, creating foam. Such expansion provides for an increased volume of the mixture up to as much as four times the original volume.

The preservation effect works with a full range of lipids or fat-based dairy products. The nitrous oxide also displaces oxygen in the product thereby further protecting the product and any lipids or oil therein from becoming rancid.

Carbonation is not necessarily desirable for beverages or drinks containing dairy products, for example ready-to-drink coffee beverages or some fruit/dairy beverage mixtures, yogurt based beverages or dairy beverages such as chocolate-flavored dairy drinks.

### Disclosure of the present invention: object, solution, advantages

Starting from the disadvantages and shortcomings as described above and taking the prior art as discussed into account, an object of the present invention is to modify the appearance and mouth feel of a beverage to have a foaming consistency.

This object is accomplished by a method comprising the features of claim 1 as well as by a beverage comprising the features of claim 12. Advantageous embodiments and expedient improvements of the present invention are disclosed in the respective dependent claims.

Basically, the present invention provides foaming beverages containing lipids.

More particularly, the present invention uses a method for making a foaming beverage, comprising providing a beverage having at least one lipid-based ingredient therein and mixing nitrous oxide with said beverage.

According to an advantageous embodiment of the present invention, a quantity of the nitrous oxide to be mixed with the beverage is determined based upon a selected increase in volume of foam that is to occur to the beverage.

According to an expedient embodiment of the present invention, the mixing of the nitrous oxide into the beverage is at a temperature from 0°C to 10°C (32°F to 50°F).

According to a favoured embodiment of the present invention, the mixing of the nitrous oxide into the beverage is at a pressure from 1 barg to 10 barg (14.5 psig to 145 psig).

According to a preferred embodiment of the present invention, dissolved air is displaced in the beverage prior to the mixing of the nitrous oxide with the beverage.

According to an advantageous embodiment of the present invention, a select pressure is maintained for the mixing and reducing the pressure prior to consuming the beverage for expanding bubbles in the beverage to provide the foam.

According to an expedient embodiment of the present invention,
- the beverage is packaged in a container at a first pressure;
- a pressurized capsule containing nitrous oxide is disposed in the container, the pressurized capsule at a second pressure less than the first pressure and greater than atmospheric pressure;
- the container is opened to release the beverage; and
- the pressurized capsule is ruptured to release the nitrous oxide to mix with the at least one lipid-based ingredient in the beverage.

According to a favoured embodiment of the present invention, a pressure of the beverage is increased for increasing an amount of the nitrous oxide to be contained in the beverage. According to a preferred embodiment of the present invention, a temperature of the beverage is decreased for increasing an amount of the nitrous oxide to be contained in the beverage.

According to an advantageous embodiment of the present invention, the nitrous oxide is a gas; the nitrous oxide may be in gas phase.

According to an expedient embodiment of the present invention, the beverage is non-carbonated.

According to a favoured embodiment of the present invention, the non-carbonated beverage is selected from the group consisting of soda, syrup, coffee, juice, fruit-dairy mixtures and chocolate-dairy mixtures.

The present invention also provides a beverage having a foam composition, comprising a liquid having at least one lipid-based ingredient therein and nitrous oxide mixed into the liquid.

According to an advantageous embodiment of the present invention, the liquid is non-carbonated.

According to an expedient embodiment of the present invention, the non-carbonated liquid is selected from the group consisting of soda, syrup, coffee, juice, fruit-dairy mixtures and chocolate-dairy mixtures.

According to a favoured embodiment of the present invention,
- a container is provided for holding the liquid at a first pressure, and
- a capsule is provided with the nitrous oxide contained therein, the capsule disposed in the liquid for holding the nitrous oxide at a second pressure less than the first pressure and greater than atmospheric pressure.

The present invention finally relates to the use of at least one liquid having at least one lipid-based ingredient therein and having nitrous oxide mixed into the liquid for making a foaming beverage.

The present embodiments provide a method to improve the appearance and mouth feel of non-carbonated beverages which contain fats and/or oils in such compositions. The beverage may be a fruit or vegetable juice of any flavour or combination of fruit and vegetable juices. The beverage can also be a syrup. In the beverages, a thick, foamy, creamy head may be obtained.

The present embodiments call for preparation of the beverage by having nitrous oxide mixed with a particular liquid or beverage. An amount of nitrous oxide to be mixed with the beverage is determined by the ratio of lipid-based ingredients in the beverage, for example, a ratio of dairy to the water-based components.

Further, the quantity of nitrous oxide to be mixed into the beverage is determined by the desired effect, specifically, the desired increase in volume and consistency of the head or foam to be produced in the beverage.

The quantity of nitrous oxide that can be mixed into the beverage is a function of the temperature and the pressure of the beverage to be mixed. Generally, increasing the pressure of the mixture with the nitrous oxide or increasing the pressure of the beverage as the nitrous oxide is being added to it permits the beverage to contain an increased amount of nitrous oxide gas.

The addition of the nitrous oxide gas to the beverage is itself sufficient to also increase the pressure of the mixture to thereby permit an increase in the amount of nitrous oxide that can be contained in the beverage. The pressure range for mixing the nitrous oxide into the beverage may be from to 1 barg to 10 barg (14.5 psig to 145 psig) by way of example only.

When the temperature of the mixture or beverage is decreased, the beverage or mixture's capacity to contain nitrous oxide is increased as well. The temperature range for which the nitrous oxide is to be mixed with the beverage may be from 0°C to 10°C (32°F to 50°F) by way of example only.

The amount of nitrous oxide added to the lipid-containing beverage will solubilise with the lipid-containing portion of the beverage and the water in the beverage. However, it is that portion of the nitrous oxide gas dissolved in the lipid portion of the beverage that produces the foamy, creamy effect.

The nitrous oxide is dissolved and comes out of solution as a gas to create a foam for the beverage. This enhances the appearance and the mouth feel of non-carbonated beverages that contain a significant amount of lipid-based ingredients, such as for example dairy based beverages.

### Example 1:

In a first representative embodiment, nitrous oxide gas is mixed with a beverage containing lipids using known equipment, such as that equipment used in the soft drink industry for carbonation. The water and lipid components of the beverage may be de-aerated to displace dissolved oxygen in the beverage, i.e. more specifically displace oxygen from the beverage prior to the addition of the nitrous oxide gas.

A temperature controlled pressure vessel with gas dissolution device including venturi-type gas injectors, spray mixtures, agitators or trays can be used to increase the exposed surface area of the beverage to the gas when mixing the gas into the beverage. When the gas is mixed with the beverage, the mixture should be maintained under pressure to maintain the gas-beverage mixture.

If the pressure is reduced, which is likely to occur just prior to consuming the beverage, the smaller bubbles that are captive in the mixture will expand, thereby producing the desired effect of a foamy, creamy head which can last for up to thirty minutes.

### Example 2:

In another embodiment, a beverage containing lipids is packaged without mixing the nitrous oxide gas into the beverage. Instead, a pressurized capsule containing nitrous oxide gas is added to the beverage container which is then sealed, which capsule is under a pressure that is less than a pressure of the beverage in the sealed container, but greater than atmospheric pressure.

When the container is opened to release the beverage, the pressure of the beverage will be reduced considerably and such differential pressure between the capsule and the beverage will cause the capsule to rupture and allow the nitrous oxide gas in the capsule to be released from the capsule into the beverage to be mixed with the lipid-containing ingredients in the beverage.

### Example 3:

In still another embodiment, nitrous oxide gas is mixed with a beverage containing lipids, the mixing being done with a carbonator device used to dissolve CO₂ into beverages not containing lipids.

The nitrous oxide can be provided from a source such as a pressurized tank or cylinder (not shown). Even if the nitrous oxide is under pressure as a liquid in the tank, upon release, the liquid nitrous oxide will expand and phase to a gas, vapor or atomized jet or stream.

It will be understood that the embodiments described herein are merely exemplary, and that one skilled in the art may make variations and modifications without departing from the spirit and scope of the invention. All such variations and modifications are intended to be included within the scope of the invention as described hereinabove and claimed. Further, all embodiments disclosed are not necessarily in the alternative, as various embodiments may be combined to provide the desired result.

## Claims

1. A method for making a foaming beverage, comprising providing a beverage having at least one lipid-based ingredient therein and mixing nitrous oxide with said beverage.

2. The method according to claim 1, further comprising determining a quantity of the nitrous oxide to be mixed with the beverage based upon a selected increase in volume of foam that is to occur to the beverage.

3. The method according to claim 1 or 2, wherein the mixing of the nitrous oxide into the beverage is at a temperature from 0°C to 10°C (32°F to 50°F).

4. The method according to at least one of claims 1 to 3, wherein the mixing of the nitrous oxide into the beverage is at a pressure from 1 barg to 10 barg (14.5 psig to 145 psig).

5. The method according to at least one of claims 1 to 4, further comprising displacing dissolved air in the beverage prior to the mixing of the nitrous oxide with the beverage.

6. The method according to at least one of claims 1 to 5, further comprising maintaining a select pressure for the mixing and reducing the pressure prior to consuming the beverage for expanding bubbles in the beverage to provide the foam.

7. The method according to at least one of claims 1 to 6, further comprising
- packaging the beverage in a container at a first pressure;
- disposing a pressurized capsule containing nitrous oxide in the container, the pressurized capsule at a second pressure less than the first pressure and greater than atmospheric pressure;
- opening the container to release the beverage; and
- rupturing the pressurized capsule to release the nitrous oxide to mix with the at least one lipid-based ingredient in the beverage.

8. The method according to at least one of claims 1 to 7, further comprising increasing a pressure of the beverage for increasing an amount of the nitrous oxide to be contained in the beverage.

9. The method according to at least one of claims 1 to 8, further comprising decreasing a temperature of the beverage for increasing an amount of the nitrous oxide to be contained in the beverage.

10. The method according to at least one of claims 1 to 9, wherein the nitrous oxide is a gas.

11. The method according to at least one of claims 1 to 10, wherein the beverage is non-carbonated, in particular selected from the group consisting of soda, syrup, coffee, juice, fruit-dairy mixtures and chocolate-dairy mixtures

12. A beverage having a foam composition, comprising a liquid having at least one lipid-based ingredient therein and nitrous oxide mixed into the liquid.

13. The beverage according to claim 12, wherein the liquid is non-carbonated, in particular selected from the group consisting of soda, syrup, coffee, juice, fruit-dairy mixtures and chocolate-dairy mixtures.

14. The beverage according to claim 12 or 13, further comprising
- a container for holding the liquid at a first pressure, and
- a capsule with the nitrous oxide contained therein, the capsule disposed in the liquid for holding the nitrous oxide at a second pressure less than the first pressure and greater than atmospheric pressure.

15. Use of at least one liquid having at least one lipid-based ingredient therein and having nitrous oxide mixed into the liquid for making a foaming beverage.
